Europäisches Patentamt

European Patent Office

Office européen des brevets

(19)

(11) Veröffentlichungsnummer: **0 266 540 B1**

(12) **EUROPÄISCHE PATENTSCHRIFT**

(45) Veröffentlichungstag der Patentschrift: **12.06.91**

(51) Int. Cl.5: **B01D 53/36, B01J 23/28**

(21) Anmeldenummer: **87114061.2**

(22) Anmeldetag: **25.09.87**

(54) **Katalysatormaterial zur Minderung der Stickoxide in Rauchgasen.**

(30) Priorität: **08.10.86 DE 3634335**

(43) Veröffentlichungstag der Anmeldung:
**11.05.88 Patentblatt 88/19**

(45) Bekanntmachung des Hinweises auf die
Patenterteilung:
**12.06.91 Patentblatt 91/24**

(84) Benannte Vertragsstaaten:
**AT BE DE ES GB IT NL SE**

(56) Entgegenhaltungen:
**DE-A- 2 458 888**
**DE-A- 2 617 744**
**DE-A- 2 846 476**
**FR-A- 2 366 058**
**GB-A- 2 079 172**

(73) Patentinhaber: **Siemens Aktiengesellschaft**
**Wittelsbacherplatz 2**
**W-8000 München 2(DE)**

(72) Erfinder: **Hums, Erich, Dr.**
**Aschaffenburger Strasse 16**
**W-8520 Erlangen(DE)**

**Beschreibung**

Die Erfindung bezieht sich auf ein Katalysatormaterial zur Stickoxidminderung in Rauchgasen in Gegenwart von Ammoniak, bei dem ausgehend von einem für sich bekannten hydrothermalen Titanoxid Vanadiumoxid sowie ein oder mehrere Oxide der Elemente Wolfram, Phosphor, Schwefel, Chrom, Zirkon, Magnesium, Kupfer, Kobalt, Eisen, Uran zugesetzt werden und dieses Material einem Prozeß der Mahlaktivierung unterzogen wird.

Ein Katalysatormaterial, mit dessen Hilfe Stickoxide in Abgasen in Gegenwart von Ammoniak katalytisch zu molekularem Stickstoff reduziert werden kann, ist durch die DE-B- 24 58 888 bekannt. Als katalytisch wirksame Kombination werden Titanoxid und Vanadiumoxid neben einer Reihe anderer Zusätze, wie z.B. Molybdän, Wolfram, Nickel, Kobalt, verwendet. Diese in der Kombination katalytisch wirksamen Substanzen werden als Hydroxide oder wasserlösliche Salze ausschließlich in einer gemeinsamen Fällung (Kopräzipitation) mit Titansäure erhalten. Sie werden anschließend getrocknet und calciniert. Bei diesem Katalysatormaterial lassen sich die Stickoxide in Rauchgasen in Gegenwart von Ammoniak reduzieren. Die Standzeit unter Betriebsbedingungen läßt bei diesem Katalysatormaterial noch zu wünschen übrig.

Es ist bereits ein weiteres Katalysatormaterial zur Verminderung der Stickoxide in Rauchgasen vorgeschlagen worden (EP-A-0 220 416; angemeldet am 25.8.86, veröffentlicht am 6.5.87, Priarität vom 6.9.85), bei dem das calcinierte Titanoxid in der Anastasform eingesetzt wird und nur oberflächlich mit Vanadiumoxid und Wolframoxid belegt ist. Mit diesem Katalysatormaterial kann die katalytische Aktivität zu niedrigeren Rauchgastemperaturen temperaturen hin verschoben werden. Es hat sich aber gezeigt, daß die Anastasmodifikation des Titanoxids nicht nur temperaturabhängig ist, sondern darüber hinaus von verschiedenen Faktoren der Vorbehandlung abhängt.

Vorliegende Anmeldung geht von der EP-A-0 239 778 (angemeldet am 23.2.87, veröffentlicht am 7.10.87, Priarität vom 6.3.86) aus, in der ein Weg gewiesen wird, wie ein Katalysatormaterial entwickelt werden kann, das ausreichend effektiv ist, den Temperaturbereich optimaler katalytischer Aktivität zu niederen Temperaturen hin verbreitert und zugleich auch die Standzeit des Katalysatormaterials erhöht. Dabei wird von handelsüblichem hydrothermalen Titandioxid ausgegangen, das nahezu fremddionenfrei und auch fehlgitterarm ist und bei dem wohl aus diesem Grunde die Phasenumwandlung in die Rutilmodifikation unterdrückt ist. Durch die Mahlaktivierung werden bei diesem Ausgangsmaterial die für die katalytische Aktivität benötigten Gitterfehlstellen nur an der Oberfläche der Kristalle erzeugt. Das hat zur Folge, daß für die Standzeit nicht mehr so sehr die Phasenumwandlung, sondern mehr der abrasive Verschleiß im Vordergrund steht.

Ausgehend von diesen Erkenntnissen liegt der vorliegenden Erfindung die Aufgabe zugrunde, die Standzeit des Katalysatormaterials hinsichtlich des abrasiven Verschleißes noch weiter zu steigern.

Diese Aufgabe wird durch die Merkmale des Anspruchs 1 gelöst. Weitere vorteilhafte Weiterbildungen sind den Ansprüchen 2 bis 11 zu entnehmen.

Infolge der Beimischung einer Molybdänkomponente zum Katalysatormaterial und der anschließenden Temperaturbehandlung der Mischung wird die Haftung der Katalysatorpartikel untereinander nach der Temperaturbehandlung deutlich verbessert. Dabei wird die Dotierung der übrigen Katalysatorbestandteile untereinander verbessert, wenn die Molbydändkomponente nach der Mahlaktivierung beigegeben wird. Andererseits ist eine Vergleichmäßigung des Molybdängehaltes und eine optimale Haftung auch bei geringsten Molybdänzugaben erreichbar, wenn die Molybdänkomponente vor der Mahlaktivierung beigegeben wird.

In besonders zweckmäßiger Weiterbildung der Erfindung kann das Material im Rahmen der Temperaturbehandlung bis maximal 650 $^\circ$C aufgeheizt werden. Durch diese thermische Behandlung wird die beigegebene Molybdänverbindung während der Aufheizphase in Molybdänoxid umgewandelt und das Molybdänoxid anschließend aufgeschmolzen. Beim Wiederabkühlen ergibt sich dann ein fester Verbund der einzelnen Katalysatorpartikelchen untereinander, der eine Voraussetzung für eine verbesserte Standzeit ist.

Weitere Einzelheiten der Erfindung werden anhand eines Ausführungsbeispiels erläutert.

Das als Ausgangsmaterial verwendete hydrothermale Titandioxid ($TiO_2$) wird mit Vanadiumoxid ($V_2O_5$) und Wolframoxid $WO_3$ in einer Suspension mit deionisiertem Wasser vermahlen. Dabei ist es auch möglich, zusätzlich zum Vanadiumoxid eines oder mehrere Oxide der Elemente Phosphor, Schwefel, Chrom, Zirkon, Magnesium, Kupfer, Kobalt, Eisen und Uran zuzugeben. Der Energieeintrag bei der Vermahlung kann im einfachsten Fall mittels geeigneter Dissolver-Laufwerke erreicht werden, sofern keine speziellen Mühlen, wie z.B. Attritor-Mühlen, verwendet werden sollen. Das Mahlgut wird zunächst getrocknet und anschließend calciniert. Dabei kann die Belegung der Titandioxidoberfläche mit den jeweilgen vermahlenen Oxiden auch schrittweise durch wiederholtes Mahlen und erneutes Calcinieren erfolgen. Das nach dem letzten Calcinieren erneut vermahlene Material wird im Ausführungsbeispiel mit Ammoniummolybdat vermischt. Statt Ammoniummolybdat kann hier auch MoO₃ verwendet werden. Für diese Vermischung ist nunmehr kein Mahlwerk mehr erforderlich, vielmehr kann diese Vermischung unter Zugabe von deionisiertem Wasser in einem mehr oder weniger teigigen Zustand mit einem Kneter erfolgen. Das Kneten hat nur die Aufgabe, das zugegebene Ammoniummolybdat oder Molybdänoxid hinreichend homogen mit dem Katalysatormaterial zu vermischen. Die so erhaltene Masse kann nun auf Streckmetall oder einem ähnlichen Träger aufgewalzt werden. Bei der anschließenden thermischen Behandlung reduziert sich zunächst der Wassergehalt. Sodann zersetzt sich das Ammoniummolybdat und bildet Molybdänoxid. Bei weiterer Temperatursteigerung schmilzt das Molybdänoxid. Diese letzte Phase der Temperaturbehandlung wird auf wenige Sekunden beschränkt. Beim Erkalten verbindet sich das Molybdänoxid mit den Katalysatorpartikeln. Durch dieses Anschmelzen des Molybdänoxids wird die Haftfestigkeit der einzelnen Komponenten untereinander deutlich verbessert. Es hat sich gezeigt, daß die Standzeit des fertigen Katalysators auf diese Weise verbessert wird.

## Ansprüche

1. Katalysatormaterial zur Stickoxidminderung in Rauchgasen in Gegenwart von Ammoniak, bei dem ausgehend von einem für sich bekannten hydrothermalen Titanoxid, Vanadiumoxid sowie ein oder mehrere Oxide der Elemente Wolfram, Phosphor, Schwefel, Chrom, Zirkon, Magnesium, Kupfer, Kobalt, Eisen, Uran zugesetzt werden und dieses Material einem Prozeß der Mahlaktivierung unterzogen wird,
   **dadurch gekennzeichnet,**
   daß eine Molybdänkomponente beigemischt wird und die Mischung anschließend einer Temperaturbehandlung unterworfen wird.

2. Katalysatormaterial nach Anspruch 1,
   **dadurch gekennzeichnet,**
   daß die Molybdänkomponente im Anschluß an die Mahlaktivierung und vor der Temperaturbehandlung beigemischt wird.

3. Katalysatormaterial nach Anspruch 1,
   **dadurch gekennzeichnet,**
   daß die Molybdänkomponente vor der Mahlaktivierung beigemischt wird.

4. Katalysatormaterial nach Anspruch 1,
   **dadurch gekennzeichnet,**
   daß die Molybdänkomponente im Anschluß an eine nach der Mahlaktivierung eingeschaltete Temperaturbehandlung (Calcinierung) beigemischt wird.

5. Katalysatormaterial nach Anspruch 1,
   **dadurch gekennzeichnet,**
   daß die Beimischung in aufgeschlämmtem, teigigem Zustand erfolgt.

6. Katalysatormaterial nach Anspruch 1,
   **dadurch gekennzeichnet,**
   daß die Mischung im Rahmen der Temperaturbehandlung bis maximal 65 0 °C aufgeheizt wird.

7. Katalysatormaterial nach Anspruch 6,
   **dadurch gekennzeichnet,**
   daß die Temperaturbehandlung zeitlich in eine mindestens einige Minuten während schonende Trockungs- und ggf. Umwandlungsphase und eine im Sekundenbereich liegende Aufschmelzphase aufgespalten ist.

8. Katalysatormaterial nach Anspruch 1,
   **dadurch gekennzeichnet,**
   daß Molybdänoxid oder eine sich in der nachfolgenden Behandlung in Molybdänoxid umwandelnde Molybdänverbindung, wie z.B. Ammoniummolybdat, beigemischt wird.

9. Katalysatormaterial nach Anspruch 5,
   **dadurch gekennzeichnet,**
   daß die erdfeuchte, teigige Mischung auf einem Träger - Streckmetallgitter, Drahtnetz oder dgl. - aufgetragen wird.

10. Katalysatormaterial nach Anspruch 9,
    **gekennzeichnet** durch ein Aufwalzen der Mischung auf dem Träger.

11. Katalysatormaterial nach Anspruch 5,
    **dadurch gekennzeichnet,**
    daß die teigige Mischung zu Granulat oder vorzugsweise wabenförmigen Formkörpern extrudiert wird.

## Claims

1. A catalyst material for decreasing nitric oxide in fumes in the presence of ammonia, in which using a hydrothermal titanium oxide known per se, vanadium oxide, as well as one or several oxides of the elements tungsten, phosphorous, sulphur, chromium, zirconium, magnesium, copper, cobalt, iron, uranium, are added and this material is subjected to a process of grinding activation,
   characterised in that a molybdenum component is admixed and the mixture then undergoes a heat treatment.

2. A catalyst material according to claim 1, characterised in that the molybdenum component is admixed subsequent to the grinding activation and before the heat treatment.

3. A catalyst material according to claim 1, characterised in that the molybdenum component is admixed before the grinding activation.

4. A catalyst material according to claim 1, characterised in that the molybdenum component is admixed subsequent to a heat treatment (calcining) started after the grinding activation.

5. A catalyst material according to claim 1, characterised in that the admixing occurs in a suspended pasty state.

6. A catalyst material according to claim 1, characterised in that the mixture is heated within the scope of the heat treatment up to a maximum of 650°c.

7. A catalyst material according to claim 6, characterised in that the heat treatment is split temporally into careful drying and possibly transformation phase taking some minutes and a melting phase lasting in the region of seconds.

8. A catalyst material according to claim 1, characterised in that molybdenum oxide or a molybdenum compound converting in the subsequent treatment into molybdenum oxide, such as ammonium molybdate is admixed.

9. A catalyst material according to claim 5, characterised in that the moist, pasty mixture is applied to a carrier - metal mesh grid, wire net or the like.

10. A catalyst material according to claim 9, characterised by rolling the mixture on the carrier.

11. A catalyst material according to claim 5, characterised in that the pasty mixture is extruded to granulate or preferably honeycomb-shaped moulded bodies.

**Revendications**

1. Catalyseur pour diminuer la teneur en oxyde d'azote des gaz de fumée en présence d'ammoniac, dans lequel en partant d'un oxyde de titane hydrothermique connu en soi, on ajoute de l'oxyde de vanadium ainsi qu'un ou plusieurs oxydes des éléments que sont le tungstène, le phosphore, le soufre, le chrome, le zirconium, le magnésium, le cuivre, le cobalt, le fer, l'uranium, et on soumet ce matériau à un processus d'activation par broyage,

caractérisé en ce qu'un constituant à base molybdène est mélangé et le mélange est soumis ensuite à un traitement thermique.

2. Catalyseur suivant la revendication 1, caractérisé

en ce que le constituant à base de molybdène est mélangé à la suite de l'activation par broyage et avant le traitement thermique.

3. Catalyseur suivant la revendication 1, caractérisé

en ce que le constituant à base de molybdène est mélangé avant l'activation par broyage.

4. catalyseur suivant la revendication 1, caractérisé

en ce que le constituant à base de molybdène est mélangé à la suite d'un traitement thermique (calcination) intercalé après l'activation par broyage.

5. Catalyseur suivant la revendication 1, caractérisé

en ce que l'addition est effectuée à l'état pâteux et en suspension.

6. Catalyseur suivant la revendication 1, caractérisé

en ce que le mélange est chauffé lors du traitement thermique jusqu'à 650°C au maximum.

7. Catalyseur suivant la revendication 6, caractérisé

en ce que le traitement thermique est subdivisé dans le temps en une phase de séchage ménagé et, le cas échéant, de transformation durant au moins quelques minutes, et en une phase de fusion de l'ordre de la seconde.

8. Catalyseur suivant la revendication 1, caractérisé

en ce que l'oxyde de molybdène ou un composé de molybdène se transformant en oxyde de molybdène dans le traitement subséquent comme par exemple du molybdate d'ammonium est additionné.

9. Catalyseur suivant la revendication 5, caractérisé en ce que le mélange pâteux et ayant la consistance de la terre est déposé sur une grille en métal déployé servant de support, sur une toile métallique ou analogue.

10. Catalyseur suivant la revendication 9, caractérisé par un cylindrage du mélange sur le substrat.

11. Catalyseur suivant la revendication 5, caractérisé en ce que le mélange pâteux est extrudé en un granulat ou, de préférence, en pièces moulées à nid d'abeilles.